# EUROPEAN PATENT SPECIFICATION

(11) **EP 1 330 619 B1**
(45) Date of publication and mention of the grant of the patent: **17.01.2007**
(21) Application number: 01965307.0
(22) Date of filing: 11.09.2001
(51) Int. Cl.: F16N 21/06, F16N 31/00, H02K 5/16, F16C 33/66

(54) **LUBRICANT DISCHARGE ARRANGEMENT**
SCHMIERMITTELABGABEVORRICHTUNG
DISPOSITIF D'EVACUATION DE LUBRIFIANT

(30) Priority: 12.09.2000 FI 20002006
(43) Date of publication of application: 30.07.2003
(73) Proprietor: ABB Oy, 00380 Helsinki (FI)
(72) Inventor: SEVOLA, Mauri, FIN-65230 Vaasa (FI); KUOKKALA, Juha-Pekka, FIN-65410 Sundom (FI); ALANEN, Juha-Pekka, FIN-65100 Vaasa (FI); EDSVIK, Kim, FIN-65370 Vaasa (FI)
(74) Representative: Niemi, Hakan Henrik
(86) International application number: PCT/FI2001/000787
(87) International publication number: WO 2002/023080

(56) References cited:
- US-A- 2 611 450
- US-A- 3 833 276

## Description

### FIELD OF THE INVENTION

The invention relates to a lubricant discharge arrangement, particularly to discharge of lubricant from a bearing housing of an electric motor. Such an arrangement typically comprises an end shield of an electric motor, comprising an inner surface directed towards the inner part of the electric motor and an opposing outer surface, a lubricant discharge opening on the outer surface of the end shield and a closing means which closes the lubricant discharge opening.

### BACKGROUND OF THE INVENTION

A shaft of an electric motor is typically supported on the body of the motor by at least two main bearings, which are typically at both ends of the motor body. To lubricate the bearings, a lubricant is used. To feed the lubricant to the bearing, in the body of the electric motor, at the end shield forming the end portion of the body a bearing housing is usually provided, into which the lubricant is fed through a lubricant channel. At the end of the lubricant channel there is a grease nipple, from which the lubricant is pressed to the lubricant channel. The end shield is further provided with a lubricant discharge opening, through which the excess lubricant can escape from the bearing housing. Various closing means, such as a screw driven into the opening, a plastic plug pressed into the opening or a grease receiving box placed at the mouth of the opening, are used for closing this lubricant discharge opening. It is also possible that the opening is left entirely open.

According to the prior art, bearings of an electric motor are lubricated during service operations by pressing fresh lubricant from a grease nipple into a lubricant housing. Also the lubricant discharge opening is thereby opened, so that the excess lubricant can escape from the bearing housing. Typically, lubrication is carried out by pressing clean lubricant through the grease nipple into the bearing housing, after which the grease nipple is closed. The lubricant discharge opening is left open and the motor is allowed to rotate a couple of hours, before the lubricant discharge opening is closed. The excess lubricant can then escape from the bearing housing through the lubricant discharge opening.

However, there are significant problems relating to this above-described arrangement where the lubricant discharge opening is closed by a screw, plug or the like. Mounted at its site of use, for example as a pump in an industrial process, an electric motor is often placed so that it is difficult to reach the lubricant discharge opening. In addition, it is often impossible to shut down an electric motor even for a short service break without disturbing the process, and thus it may be fatal for maintenance personnel to open and close the screw or plug of the lubricant discharge opening while the motor is running, if the motor is arranged to rotate a fan, for instance, the rotor of which rotates at high speed, causing a strong air current. Further, the motor can be enclosed so that it is not possible to open the screw of the lubricant discharge opening without dismantling the enclosure.

These above described problems relating to service operations easily cause significant disadvantages to the motor and its environment. During lubrication, the screw of the lubricant discharge opening is possibly not opened at all, but more lubricant is pressed from the grease nipple to the bearing. The bearing housing is then filled with the lubricant, whereby the bearing starts to heat up and the lubricant expands, which heats the bearing further. Then, the lubricant starts to escape from the bearing and lubricant housing, for instance from the joints of junctions and seals, in an uncontrolled manner and causes that the motor gets dirty and the lubricant spills to the motor environment in an uncontrolled manner, which causes significant disadvantages in environments requiring purity, such as in food industry and hospitals. When overheated, the bearing may also get damaged and break the entire motor.

Another problem is that during lubrication, the closing means for the lubricant discharge opening is opened, but is not placed back to its place after the service. The lubricant can thus spill to the environment, which causes significant disadvantages in environments requiring purity. In addition, the sealing of the motor is impaired, and dust and moisture pass into the bearing housing of the motor through an unclosed opening, which may damage the bearing and the motor.

The prior art solution comprising a lubricant discharge opening provided at an end shield of an electric motor, the opening being arranged to be closed by driving a screw, plug or a similar closing means to it, thus easily causes serious problems to the motor, its environment, and the properly performed services waste time and cause extra costs.

### BRIEF DESCRIPTION OF THE INVENTION

The object of the present invention is to eliminate prior art drawbacks and to disclose an improved solution for closing a lubricant discharge opening provided at an end shield of an electric motor.

This is achieved by an arrangement the characteristic features of which are defined according to the present invention in the claims. More specifically, this arrangement of the invention is mainly characterized in that the closing means for the lubricant discharge opening in the end shield of the electric motor comprises a frame-like member arranged at the discharge opening and substantially surrounding the entire discharge opening, the member comprising an opening, which is substantially equal in size to the lubricant discharge opening of the end shield and is arranged to be closed by a closing element which closes the opening tightly, having connected thereto a control element for opening and closing the closing element.

The invention is based on the idea that a lubricant discharge opening in an end shield of an electric motor is provided with a closing means comprising a frame arranged at the mouth of the discharge opening and surrounding the discharge opening. The frame comprises an opening, which is equal in size to the lubricant discharge opening of the end shield and may be closed by a closing element which closes the opening tightly and is preferably of a slide or flap type. The closing element is connected to a control element, which is controlled such that the closing element can be opened and closed. Implemented in this manner, the closing means is considerably easier and faster to use than if it was to be screwed, pressed or mounted from the immediate vicinity of the lubricant discharge opening in some other way.

The preferred embodiments of the invention are disclosed in the dependent claims.

The closing element of the closing means is preferably a planar, sliding slide. In this case, the closing means is provided with a groove which is transverse to the penetration direction of the opening and in which the slide is arranged to move by sliding, whereby the opening can be opened by moving the slide in the groove so that it is slid away from the front of the opening and, vice versa, the opening can be closed by moving the slide in front of the opening.

The closing element can preferably also be a flap. The closing element is thus arranged to open by means of a hinge mechanism so that it turns around the fulcrum of the hinge mechanism. The closing element preferably comprises a spring mechanism which is arranged to keep the closing element in closed position. The flap-like closing element is, however, arranged to open under the influence of the lubricant pressure and thus to open the lubricant discharge opening, if the escaping lubricant directs a sufficiently high pressure to the closing element.

During lubrication, the opening and the closing can preferably be carried out by a control means which is connected to the closing means and is, for instance, a rod-like arm, to the first end of which the slide is secured and the second end of which arm is sized to be so long that it allows that the closing means is controlled from outside the transverse external dimensions of the electric motor, i.e. from the side of the motor, in which case no dangerous mounting operations need to be performed near the motor shaft. In addition, the position or protrusion of the arm of the control means acts as a visual sign of the open/closed position of the closing means.

In the end shield of the electric motor, the outer surface of the end shield below the lubricant discharge opening is preferably provided with a horizontal groove, which is in the direction of the end shield surface and the measures of which correspond to the width of the end shield. The control means of the closing means is thus arranged in the groove of the end shield and also to move in the groove. When the closing element is a slide, the surface thereof, which is supported on the end shield of the electric motor, is provided with a bulge which is arranged to fit into a recess in the end shield groove and to restrict the movement of the closing element to cover the external dimensions of the discharge opening. This provides the advantage that the slide of the closing means can be controlled from outside the transverse external dimensions of the electric motor, i.e. from the side of the motor, and that it is possible to arrange all members of the closing means inside the longitudinal external dimensions of the end shield of the electric motor, which, in turn, makes it easier to mount the motor on its site of use.

The invention provides considerable advantages. By using a closing means of the invention, which is controlled from the side of the motor, it is easy to open and close the lubricant discharge opening of the electric motor mounted on its site of use. The process performed by the motor will not be disturbed by the opening or closing of the lubricant discharge opening, nor does the closing of the lubricant discharge opening in the running motor cause any danger to the life of maintenance personnel. Further, it is not necessary to dismantle the enclosure of the motor in order to open the lubricant discharge opening, because the arm of the control means can easily be sized so as to extend outside the enclosure. This saves service time and costs.

The solution according to the invention thus allows a better control of the lubrication event. Thus, lubrication can always be performed according to instructions, which means that the motor will not get dirty and the lubricant will not spill to the environment of the motor in an uncontrolled manner, and the bearing will not overheat and damage due to the bearing housing which has filled with lubricant. In addition, the sealing of the motor remains good, for example in accordance with the protection class IP66, because it is always simple to set the closing means to a closed position.

### BRIEF DESCRIPTION OF THE FIGURES

In the following, the invention will be described in greater detail by means of the attached drawings, in which
Figure 1 shows an end shield of an electric motor, where a lubricant discharge opening is provided with a slide type of closing means according to a preferred embodiment,
Figure 2 is an axonometric view of an embodiment of a frame-like member of the slide type of closing means,
Figure 3 is a side view of the frame-like member of the closing means of Figure 2,
Figure 4 shows the structure of the closing means for the lubricant discharge opening according to Figure 1 in closed position, the view illustrating a cross-section of the end shield as seen from the penetration direction of the lubricant discharge opening,
Figure 5 shows the structure of the closing means for the lubricant discharge opening according to Figure 1 in open position, the view illustrating a cross-section of the end shield as seen from the penetration direction of the lubricant discharge opening,
Figure 6 shows the structure of the closing means for the lubricant discharge opening according to Figure 1, the view illustrating a cross-section of the end shield as seen from the side of the closing means,
Figure 7 shows an electric motor fan housing, the cover of which is penetrated by the arm of a control means of the closing means for the lubricant opening,
Figure 8 is an axonometric view of an end cap of the end shield of the electric motor, where a flap type of closing means according to an embodiment is arranged,
Figure 9 shows the structure of the flap type of closing means of Figure 8 in closed position, as seen from the direction of the lubricant discharge opening,
Figure 10 shows the structure of the flap type of closing means of Figure 8 in open position, as seen from the direction of the lubricant discharge opening.

### DESCRIPTION OF THE PREFERRED EMBODIMENT

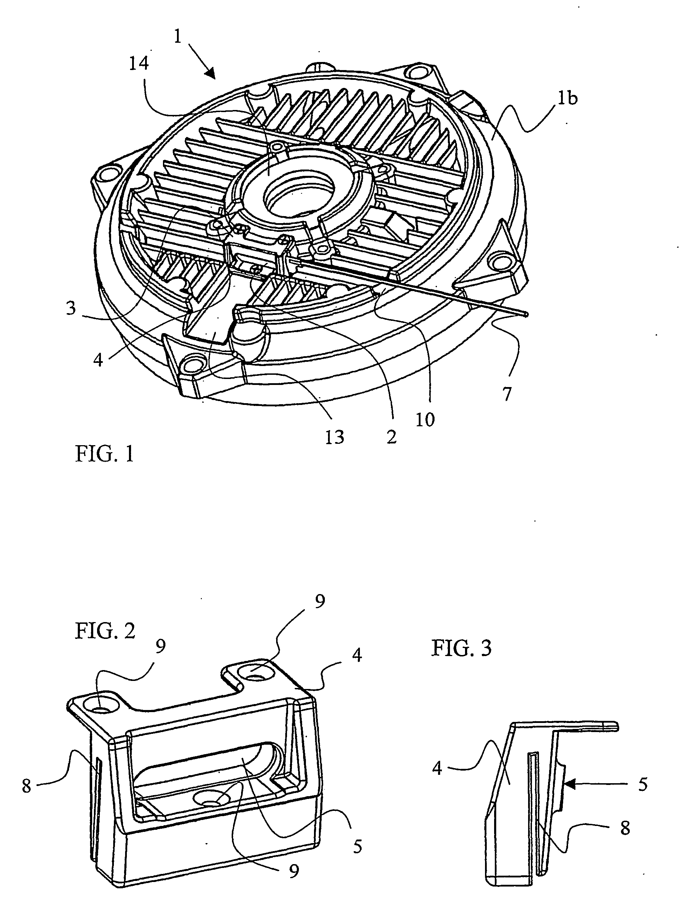

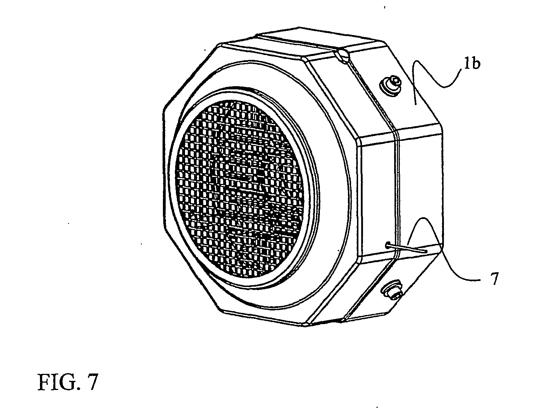

Figures 1 to 10 illustrate an example of the structure and operation of a lubricant discharge arrangement according to a typical preferred embodiment.

According to Figure 1, the arrangement comprises an end shield 1 of an electric motor, the central part of the shield forming a part of a bearing housing 14 of the electric motor. The end shield 1 comprises an inner surface 1a directed towards the inner part of the electric motor and an opposing outer surface 1b. The outer surface 1b of the end shield 1 comprises a lubricant discharge opening 2, which typically opens downwards when the motor is mounted in its place. A closing means 3 which closes the discharge opening 2 is mounted at the lubricant discharge opening 2. To feed lubricant to the bearing, the end shield 1 of the electric motor is provided with a lubricant channel, along which the lubricant is pressed to the bearing housing 14. At the end of the lubricant channel there is a grease nipple, from which the lubricant is pressed into the lubricant channel. During service operations, the bearings of the electric motor are lubricated by pressing fresh lubricant from the grease nipple to the lubricant housing.

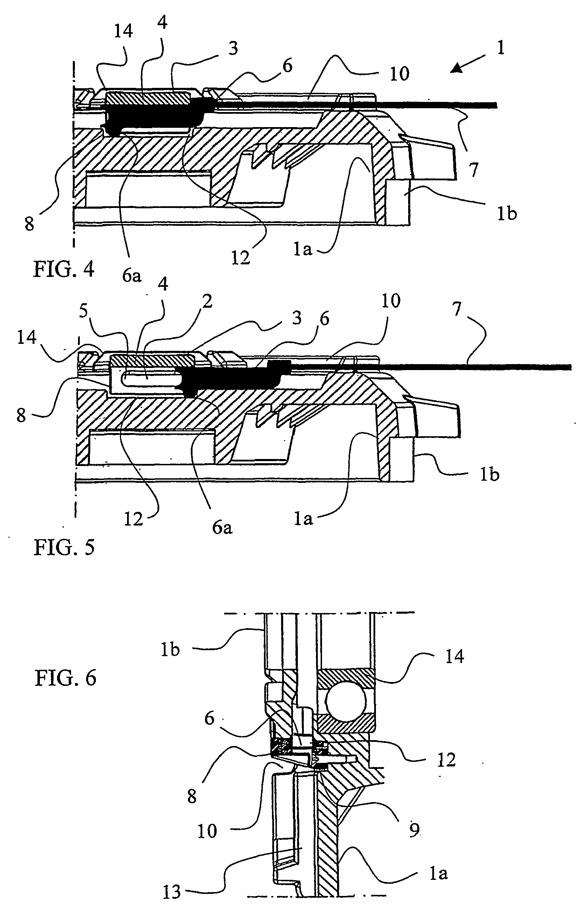

The closing means 3 for the lubricant discharge opening 2 comprises a frame-like member 4 arranged at the discharge opening 2 and surrounding the entire discharge opening 2. A preferred embodiment of such a member can be seen in Figure 2. The frame-like member 4 comprises an opening 5, which is equal in size to the lubricant discharge opening 2 of the end shield 1 and which penetrates the entire member 4, thus forming a short channel which is open at its both ends. This opening 5 and the channel are arranged to be closed by a closing element 6 which closes the opening 5 tightly. The closing element 6 of the closing means 3 is a planar, sliding slide, a preferred embodiment of which can be seen in Figures 4 and 5. On the closing element 6 surface which is supported on the end shield 1 there is a bulge 6a, which is arranged to restrict the movement of the closing element 6 to cover the external dimensions of the discharge opening 2.

The frame-like member 4 of the closing means 3 also comprises fastening elements 9, such as fastening lugs, for fastening the frame-like member 4 of the closing means 3 to the end shield 1 of the electric motor by screws, for instance. The manufacturing material of the frame-like member 4 of the closing means 3 is preferably rubber, but it may also be a similar material having good sealing properties.

According to Figures 2 and 3, the closing means 3 comprises a groove 8 which is transverse to the penetration direction of the opening 5 and in which the closing means 6 is arranged to move. The groove 8 is wider than the height of the opening 5 of the closing means 3 and the length of the groove 8 is equal to the width of the frame-like member 4. The closing element 6, i.e. the slide 6, pushed into the groove 8 thus closes the channel formed by the frame-like member 4 of the closing means 3 and the opening 5 therein, and so the lubricant in the bearing housing 14 cannot be discharged out of the bearing housing 14. Correspondingly, the closing element 6 which is at least partly pulled out of the groove 8 opens the channel formed by frame-like member 4 of the closing means 3 and the opening 5 therein, and thus the excess lubricant in the bearing housing 14 can be discharged out of the bearing housing 14.

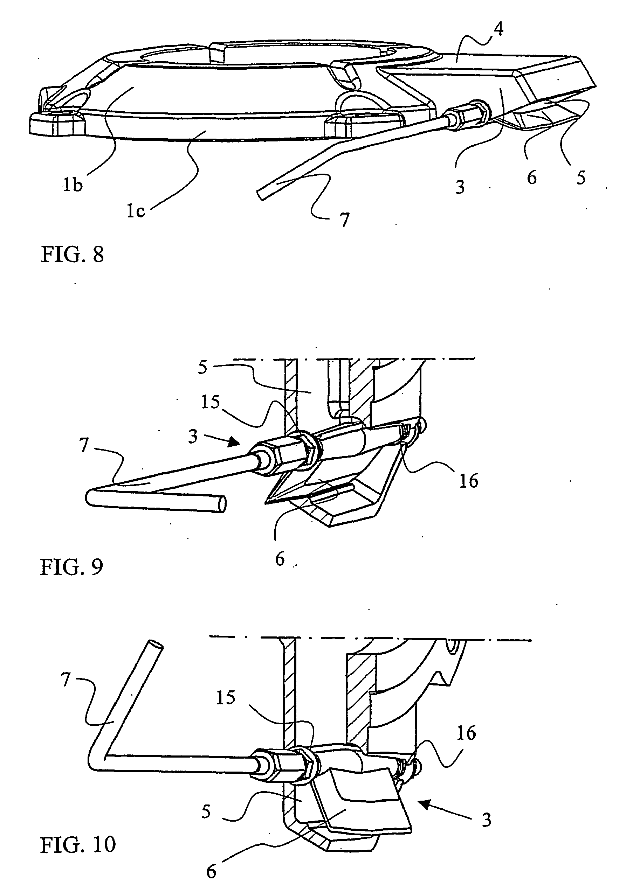

When the closing element 6 for the lubricant discharge opening 2 is of a flap type, the arrangement according to Figure 8 comprises an end shield 1 of an electric motor or, in larger motors, an end cap 1c in the end shield, forming a part of a bearing housing 14 of the electric motor. The end shield or cap 1 comprises an inner surface 1a directed towards the inner part of the electric motor and an opposing outer surface 1 b. The outer surface 1 b of the end shield or cap 1 comprises a lubricant discharge opening, which typically opens downwards when the motor is mounted in its place. A closing means 3 which closes the discharge opening 2 is mounted at the lubricant discharge opening. The closing means 3 for the lubricant discharge opening comprises a frame-like member 4 arranged at the discharge opening and surrounding the entire discharge opening. A preferred embodiment of such a member can be seen in Figures 8, 9 and 10. The frame-like member 4 comprises an opening 5, which is equal in size to the lubricant discharge opening of the end shield or cap 1 c and which penetrates the entire member 4, thus forming a channel which is open at its both ends. This opening 5 and the channel are arranged to be closed by a closing element 6 which closes the opening 5 tightly. The closing element 6 of the closing means 3 is a flap, a preferred embodiment of which is shown in Figures 8, 9 and 10. The closing element 6, i.e. the flap, of the closing means 3 is arranged to open by means of a hinge mechanism 15 so that it turns around the fulcrum of the hinge mechanism 15. The closing element 6 of the closing means 3 comprises a spring mechanism 16. The spring mechanism 16 is implemented by means of a spring mechanism known per se, such as by means of a helical spring or a torsional spring. The spring mechanism 16 is arranged to keep the closing element 6 in closed position. The spring force of the spring element is, however, designed to open the closing element 6 of the closing means 3 under the influence of the lubricant pressure, if the lubricant escaping from the lubricant discharge opening directs a sufficiently high pressure to the closing element 6, i.e. the flap.

The frame-like member 4 of the closing means 3 also comprises fastening elements 9, such as fastening lugs, for fastening the frame-like member 4 of the closing means 3 to the end shield 1 of the electric motor by screws, for instance. The manufacturing material of the frame-like member 4 of the closing means 3 is preferably rubber, but it may also be a similar material having good sealing properties.

According to Figures 2 and 3, the closing means 3 comprises a groove 8 which is transverse to the penetration direction of the opening 5 and in which the closing element 6 is arranged to move. The groove 8 is wider than the height of the opening 5 of the closing means 3 and the length of the groove 8 is equal to the width of the frame-like member 4. The closing element 6, i.e. the slide 6, pushed into the groove 8 thus closes the channel formed by the frame-like member 4 of the closing means 3 and the opening 5 therein, and so the lubricant in the bearing housing 14 cannot be discharged out of the bearing housing 14. Correspondingly, the closing means 6 which is at least partly pulled out of the groove 8 opens the channel formed by the frame-like member 4 of the closing means 3 and the opening 5 therein, and thus the excess lubricant in the bearing housing 14 can be discharged out of the bearing housing 14.

Figures 1, 4, 5, 7, 8, 9, 10 show that the closing element 6 of the closing means 3 is connected to a control element 7 to move the closing element 6 and to open and close the closing means. This control means 7 connected to the closing element 6 of the closing means 3 typically comprises a rod-like arm, to the first end of which the closing element 6 is secured, and the second end of the rod, i.e. the arm, is sized to be so long that it allows the slide 6 to be controlled from outside the transverse external dimensions of the electric motor, i.e. from the side of the motor.

By means of the position or protrusion of the arm of the control means 7, extending outside the transversal external dimensions of the electric motor, the control means 7 connected to the closing element 6 of the closing means 3 shows when the closing means 3 is in open/closed position.

According to Figures 1, 4, 5 and 6, the outer surface 1b of the end shield 1 below the lubricant discharge opening 2 is provided with a horizontal groove 10, which is in the direction of the surface of the end shield 1 and the measures of which substantially correspond to the width of the end shield 1. In this case, the control means 7 of the closing element 6 of the closing means 3 is placed to the groove 10 of the end shield 1 and to move in the groove 10. At the central part of the groove 10, i.e. at the lubricant discharge opening 2, there is a recess 12, the width of which corresponds to the discharge opening 2. In the closing element 6, a side surface which is supported on the end shield 1 of the electric motor is provided with a bulge 6a, which is arranged to fit into the recess 12 of the groove 10 of the end shield 1 and to restrict the movement of the closing element 6 to cover the external dimensions of the discharge opening.

In the embodiment according to Figure 1, the end shield 1 of the electric motor below the lubricant discharge opening 2 is provided with a vertical groove 13. Through this groove 13, the excess lubricant can escape from the lubricant discharge opening 2 along the end shield 1 of the motor out of the bearing housing 14. If the electric motor is placed in conditions requiring high purity, a lubricant receiving means, such as a box, bag or the like, can be fixed immediately under the lubricant discharge opening 2 to this groove 13, and the excess lubricant accumulates in the lubricant receiving means and does not run out along the end shield 1 of the motor and spill around the environment of the motor. The type of the receiving means is such that it can be emptied and cleaned or it can be disposable.

In accordance with the above described embodiment, the structure of the closing means 3 for the lubricant discharge opening 2 fits into the limits of the external dimensions of the electric motor. All members of the closing means 3 are arranged inside the transverse external dimensions of the end shield 1 of the electric motor. If the position of the closing element 6 needs to be shown by extending the arm of the control means outside the external dimensions of the motor, this can be done. The entire arm of the control means 7 can, however, be sunk into the horizontal groove 10 which is in the width direction of the end shield 1. In this case, all members of the closing means 3 fit inside the external dimensions of the body part of the electric motor.

## Claims

1. A lubricant discharge arrangement, particularly in a bearing housing (14) of an electric motor, comprising:
an end shield (1) of the electric motor, the end shield (1) comprising an inner surface (1 a) directed towards the inner part of the electric motor and an opposing outer surface (1 b),
a lubricant discharge opening (2) on the outer surface (1b) of the end shield (1) and
a closing means (3) which closes the lubricant discharge opening (2),
**characterized in that**
the closing means (3) comprises a frame-like member (4) arranged at the discharge opening (2) and substantially surrounding the entire discharge opening (2), which
member (4) comprises an opening (5), which is substantially equal in size to the discharge opening (2) of the end shield (1) and which penetrates the member (4) and forms a channel which is open at its both ends, and which
opening (5) is arranged to be closed by a closing element (6) which closes the opening (5) tightly and which
closing element (6) is connected to a control element (7) for opening and closing the closing element (6).

2. An arrangement as claimed in claim 1, **characterized in that** the closing element (6) of the closing means (3) is a planar, sliding slide.

3. An arrangement as claimed in claim 2, **characterized in that** the closing means (3) comprises a groove (8) which is substantially transverse to the penetration direction of the opening (5) and in which the slide (6) is arranged to move.

4. An arrangement as claimed in claim 1, **characterized in that** the closing element (6) of the closing means (3) is a flap.

5. An arrangement as claimed in claim 4, **characterized in that** the closing element (6) of the closing means (3) is arranged to open by means of a hinge mechanism turning around the fulcrum of the hinge mechanism.

6. An arrangement as claimed in claim 4 or 5, **characterized in that** the closing element (6) of the closing means (3) comprises a spring mechanism which is arranged to keep the closing element (6) in closed position.

7. An arrangement as claimed in claim 6, **characterized in that** the closing element (6) of the closing means (3) is arranged to open under the influence of the lubricant pressure when the lubricant escaping from the lubricant discharge opening (2) directs a sufficiently high pressure to the closing element (6).

8. An arrangement as claimed in claim 2 or 4, **characterized in that** a control means (7) connected to the closing element (6) of the closing means (3) comprises a substantially a rod-like arm.

9. An arrangement as claimed in claim 8, **characterized in that** the control means (7) connected to the closing element (6) of the closing means (3) is sized so as to extend outside the transversal external dimensions of the electric motor, which allows the closing element (6) of the closing means (3) to be controlled from outside the transverse external dimensions of the electric motor.

10. An arrangement as claimed in claim 8, **characterized in that** the control means (7) connected to the closing element (6) of the closing means (3) is arranged to show when the closing means (3) is in open/closed position by means of the protrusion of the arm of the control means (7) to be seen from outside the transversal external dimensions of the electric motor.

11. An arrangement as claimed in claim 8, **characterized in that** the control means (7) connected to the closing element (6) of the closing means (3) is arranged to show when the closing means (3) is in open/closed position by means of the position of the arm of the control means (7) to be seen from outside the transversal external dimensions of the electric motor.

12. An arrangement as claimed in claim 1, **characterized in that** the outer surface (1b) of the end shield (1) below the lubricant discharge opening (2) is provided with a horizontal groove (10), which is in the direction of the surface of the end shield (1) and the measures of which substantially correspond to the width of the end shield (1).

13. An arrangement as claimed in claim 2 or 12, **characterized in that** the closing element (6) surface which is supported on the end shield (1) comprises a bulge (6a), which is arranged to fit into a recess (12) in the groove (10) of the end shield (1) and to restrict the movement of the closing element to cover the external dimensions of the discharge opening (2).

14. An arrangement as claimed in claim 2 or 13, **characterized in that** the control means (7) of the closing element (6) of the closing means (3) is arranged in the groove (10) of the end shield (1) and to move in the groove (10).

15. An arrangement as claimed in any one of the preceding claims, **characterized in that** all members of the closing means (3) are arranged inside the longitudinal external dimensions of the end shield (1) of the electric motor.

## Patentansprüche

1. Eine Schmiermittelabgabevorrichtung, insbesondere in einem Lagergehäuse (14) eines Elektromotors, aufweisend:
eine Endabschirmung (1) des Elektromotors, wobei die Endabschirmung (1) eine innere Oberfläche (1a), welche in Richtung des inneren Teils des Elektromotors weist, und eine gegenüberliegende äußere Oberfläche (1b) aufweist; eine Schmiermittelabgabeöffnung (2) an der äußeren Oberfläche (1b) der Endabschirmung (1); und
ein Verschlussmittel (3), welches die Schmiermitteiabgabeöffnung (2) verschließt;
**dadurch gekennzeichnet, dass**
das Verschlussmittel (3) ein rahmenartiges Bauteil (4) aufweist, welches an der Abgabeöffnung (2) angeordnet ist und die gesamte Abgabeöffnung (2) im Wesentlichen umgibt, wobei
besagtes Bauteil (4) eine Öffnung (5) aufweist, welche im Wesentlichen gleiche Größe wie die Abgabeöffnung (2) der Endabschirmung (1) hat und welche das Bauteil (4) durchdringt und einen an seinen beiden Enden offenen Kanal bildet, wobei
besagte Öffnung (5) von einem Verschlusselement (6) verschlossen zu werden vermag, das die Öffnung (5) dicht verschließt und wobei
besagtes Verschlusselement (6) mit einem Steuerelement (7) zum Öffnen und Schließen des Verschlusselements (6) verbunden ist.

2. Eine Vorrichtung nach Anspruch 1, **dadurch gekennzeichnet, dass** das Verschlusselement (6) des Verschlussmittels (3) ein ebener gleitbeweglicher Schieber ist.

3. Eine Vorrichtung nach Anspruch 2, **dadurch gekennzeichnet, dass** das Verschlussmittel (3) eine Ausnehmung (8) aufweist, welche im Wesentlichen quer zur Durchdringungsrichtung der Öffnung (5) ist und in welcher sich der Schieber (6) zu bewegen vermag.

4. Eine Vorrichtung nach Anspruch 1, **dadurch gekennzeichnet, dass** das Verschlusselement (6) des Verschlussmittels (3) eine Klappe ist.

5. Eine Vorrichtung nach Anspruch 4, **dadurch gekennzeichnet, dass** das Verschlusselement (6) des Verschlussmittels (3) mittels eines Scharniermechanismus zu öffnen ist, der um einen Schwenkpunkt des Scharniermechanismus dreht.

6. Eine Vorrichtung nach Anspruch 4 oder 5, **dadurch gekennzeichnet, dass** das Verschlusselement (6) des Verschlussmittels (3) einen Federmechanismus aufweist, der das Verschlusselement (6) in der geschlossenen Position zu halten vermag.

7. Eine Vorrichtung nach Anspruch 6, **dadurch gekennzeichnet, dass** das Verschlusselement (6) des Verschlussmittels (3) sich unter dem Einfluss des Schmiermitteldrucks zu öffnen vermag, wenn aus der Schmiermittelabgabeöffnung (2) austretendes Schmiermittel ausreichend hohen Druck auf das Verschlusselement (6) ausübt.

8. Eine Vorrichtung nach Anspruch 2 oder 4, **dadurch gekennzeichnet, dass** ein Steuermittel (7), das mit dem Verschlusselement (6) des Verscillussmittels (3) verbunden ist, einen im Wesentlichen stabförmigen Arm aufweist.

9. Eine Vorrichtung nach Anspruch 8, **dadurch gekennzeichnet, dass** das Steuermittel (7), das mit dem Verschlusselement (6) des Verschlussmittels (3) verbunden ist, so dimensioniert ist, dass es sich über die Außenquerabmessung des Elektromotors hinaus erstreckt, was erlaubt, dass das Verschlusselement (6) des Verschlussmittels (3) von außerhalb der Außenquerabmessung des Elektromotors her steuerbar ist.

10. Eine Vorrichtung nach Anspruch 8, **dadurch gekennzeichnet, dass** das Steuermittel (7), das mit dem Verschlusselement (6) des Verscillussmittels (3) verbunden ist, mittels eines Vorstehens des Arms des Steuermittels (7), von außerhalb der Außenquerabmessung des Elektromotors her sichtbar, anzuzeigen vermag, wenn das Verschlussmittel (3) in einer offenen/geschlossenen Position ist.

11. Eine Vorrichtung nach Anspruch 8, **dadurch gekennzeichnet, dass** das Steuermittel (7), das mit dem Verschlusselement (6) des Verschlussmittels (3) verbunden ist, mittels einer Lage des Arms des Steuermittels (7), von außerhalb der Außenquerabmessung des Elektromotors her sichtbar, anzuzeigen vermag, wenn das Verschlussmittel (3) in einer offenen/geschlossenen Position ist.

12. Eine Vorrichtung nach Anspruch 1, **dadurch gekennzeichnet, dass** die äußere Oberfläche (1b) der Endabschirmung (1) unterhalb der Schmiermittelabgabeöffnung (2) mit einer horizontalen Ausnehmung (10) versehen ist, welche in Richtung der Oberfläche der Endabschirmung (1) liegt und deren Abmessungen im Wesentlichen der Breite der Endabschirmung entsprechen.

13. Eine Vorrichtung nach Anspruch 2 oder 12, **dadurch gekennzeichnet, dass** eine Oberfläche des Verschlusselements (6), welche an der Endabschirmung (1) abgestützt ist, einen Vorsprung (6a) aufweist, der in eine Vertiefung (12) in der Ausnehmung (10) der Endabschirmung (1) zu passen vermag und die Bewegung des Verschlusselements zur Abdeckung der Außenabmessungen der Abgabeöffnung zu begrenzen vermag.

14. Eine Vorrichtung nach Anspruch 2 oder 13, **dadurch gekennzeichnet, dass** das Steuermittel (7) des Verschlusselements (6) des Verschlussmittels (3) in der Ausnehmung (10) der Endabschirmung (1) anordenbar ist und sich In der Ausnehmung (10) zu bewegen vermag.

15. Eine Vorrichtung nach einem der vorhergehenden Ansprüche, **dadurch gekennzeichnet, dass** alle Bauteile des Verschiussmittels (3) innerhalb der Außenlängsabmessungen der Endabschirmung (1) des Elektromotors angeordnet sind.

## Revendications

1. Agencement de décharge de lubrifiant, en particulier dans un corps de palier (14) d'un moteur électrique, comprenant :
un flasque (1) du moteur électrique, le flasque (1) comprenant une surface intérieure (1a) orientée vers la partie intérieure du moteur électrique et une surface extérieure opposée (1b),
une ouverture de décharge de lubrifiant (2) sur la surface extérieure (1b) du flasque (1), et
un moyen de fermeture (3) qui ferme l'ouverture de décharge de lubrifiant (2),
**caractérisé en ce que** :
le moyen de fermeture (3) comprend un élément du type châssis (4) agencé au niveau de l'ouverture de décharge (2) et entourant sensiblement toute l'ouverture de décharge (2),
lequel élément (4) comprend une ouverture (5), dont les dimensions sont sensiblement égales à celles de l'ouverture de décharge (2) du flasque (1) et qui pénètre dans l'élément (4) en formant un canal ouvert au niveau de ses deux extrémités, et
laquelle ouverture (5) est conçue pour être fermée par un élément de fermeture (6) qui ferme l'ouverture (5) de manière serrée, et
lequel élément de fermeture (6) est raccordé à un élément de commande (7) destiné à ouvrir et à fermer l'élément de fermeture (6).

2. Agencement selon la revendication 1, **caractérisé en ce que** l'élément de fermeture (6) du moyen de fermeture (3) est un coulisseau coulissant plan.

3. Agencement selon la revendication 2, **caractérisé en ce que** le moyen de fermeture (3) comprend une rainure (8) sensiblement transversale par rapport à la direction de pénétration de l'ouverture (5) et dans laquelle le coulisseau (6) est conçu pour se déplacer.

4. Agencement selon la revendication 1, **caractérisé en ce que** l'élément de fermeture (6) du moyen de fermeture (3) est un rabat.

5. Agencement selon la revendication 4, **caractérisé en ce que** l'élément de fermeture (6) du moyen de fermeture (3) est conçu pour s'ouvrir par le biais d'un mécanisme d'articulation tournant autour du point d'appui du mécanisme d'articulation.

6. Agencement selon la revendication 4 ou 5, **caractérisé en ce que** l'élément de fermeture (6) du moyen de fermeture (3) comprend un mécanisme à ressort conçu pour maintenir l'élément de fermeture (6) dans la position fermée.

7. Agencement selon la revendication 6, **caractérisé en ce que** l'élément de fermeture (6) du moyen de fermeture (3) est conçu pour s'ouvrir sous l'influence de la pression du lubrifiant lorsque le lubrifiant qui s'échappe de l'ouverture de décharge de lubrifiant (2) dirige une pression suffisamment haute vers l'élément de fermeture (6).

8. Agencement selon la revendication 2 ou 4, **caractérisé en ce qu'**un moyen de commande (7) raccordé à l'élément de fermeture (6) du moyen de fermeture (3) comprend un bras en forme de tige.

9. Agencement selon la revendication 8, **caractérisé en ce que** le moyen de commande (7) raccordé à l'élément de fermeture (6) du moyen de fermeture (3) présente des dimensions qui lui permettent de s'étendre à l'extérieur des dimensions transversales externes du moteur électrique, ce qui permet à l'élément de fermeture (6) du moyen de fermeture (3) d'être commandé à partir de l'extérieur des dimensions transversales externes du moteur électrique.

10. Agencement selon la revendication 8, **caractérisé en ce que** le moyen de commande (7) raccordé à l'élément de fermeture (6) du moyen de fermeture (3) est conçu pour être exposé lorsque le moyen de fermeture (3) se trouve dans la position ouverte/fermée par le biais de la saillie du bras du moyen de commande (7) qui doit être vu de l'extérieur des dimensions transversales externes du moteur électrique.

11. Agencement selon la revendication 8, **caractérisé en ce que** le moyen de commande (7) raccordé à l'élément de fermeture (6) du moyen de fermeture (3) est conçu pour être exposé lorsque le moyen de fermeture (3) se trouve dans la position ouverte/fermée par la position du bras du moyen de commande (7) qui doit être vu de l'extérieur des dimensions transversales externes du moteur électrique.

12. Agencement selon la revendication 1, **caractérisé en ce que** la surface extérieure (1b) du flasque (1) en dessous de l'ouverture de décharge de lubrifiant (2) est munie d'une rainure horizontale (10), qui se situe dans la direction de la surface du flasque (1) et dont les mesures correspondent sensiblement à la largeur du flasque (1).

13. Agencement selon la revendication 2 ou 12, **caractérisé en ce que** la surface de l'élément de fermeture (6) qui est supportée sur le flasque (1) comprend un renflement (6a), qui est conçu pour s'insérer dans une cavité (12) dans la rainure (10) du flasque (1) et pour limiter le mouvement de l'élément de fermeture de manière à recouvrir les dimensions externes de l'ouverture de décharge (2).

14. Agencement selon la revendication 2 ou 13, **caractérisé en ce que** le moyen de commande (7) de l'élément de fermeture (6) du moyen de fermeture (3) est agencé dans la rainure (10) du flasque (1) et pour se déplacer dans la rainure (10).

15. Agencement selon l'une quelconque des revendications précédentes, **caractérisé en ce que** tous les éléments du moyen de fermeture (3) sont agencés dans les dimensions longitudinales externes du flasque (1) du moteur électrique.
